# EUROPÄISCHE PATENTSCHRIFT

(11) **EP 3 913 287 B1**
(45) Veröffentlichungstag und Bekanntmachung des Hinweises auf die Patenterteilung: **02.10.2024**
(21) Anmeldenummer: 21174615.1
(22) Anmeldetag: 19.05.2021
(51) Int. Cl.: F24D 3/14, F24D 3/16, F24F 5/00, E04B 9/18, E04B 9/24, E04B 9/04

(54) **MONTAGEBAUGRUPPE FÜR EINE HEIZ-KÜHLDECKE, HEIZ-KÜHLDECKE, DIE EINE DERARTIGE MONTAGEBAUGRUPPE UMFASST, SOWIE VERFAHREN ZUR MONTAGE EINER HEIZ-KÜHLDECKE**
ASSEMBLY FOR A HEATING/COOLING CEILING, HEATING/COOLING CEILING COMPRISING SUCH AN ASSEMBLY AND METHOD FOR MOUNTING A HEATING/COOLING CEILING
MODULE DE MONTAGE POUR UN PLAFOND REFROIDISSANT CHAUFFANT, PLAFOND REFROIDISSANT CHAUFFANT COMPRENANT UN TEL MODULE DE MONTAGE, AINSI QUE PROCÉDÉ DE MONTAGE D'UN PLAFOND REFROIDISSANT CHAUFFANT

(30) Priorität: 19.05.2020 FR 2005107
(43) Veröffentlichungstag der Anmeldung: 24.11.2021
(73) Patentinhaber: Rehau Tube Sarl, 57340 Morhange (FR)
(72) Erfinder: Bourgel, Christopher, 57340 Viller (FR)
(74) Vertreter: Glaser, Horst

(56) Entgegenhaltungen:
- EP-A2- 0 406 476
- EP-A2- 2 169 316
- WO-A1-02/37032
- WO-A1-03/093732
- DE-U1- 202017 101 128
- GB-A- 2 437 141

## Beschreibung

Die vorliegende Erfindung bezieht sich auf das allgemeine technische Gebiet der Heiz-Kühldecken bzw. der reversiblen Strahlungsdecken. Solche Decken, z. B. als abgehängte Decken ausgeführt, werden zum Heizen und Kühlen eines Raumes in einem Haus verwendet. Diese reversiblen Strahlungsdecken sind mit Heizungs-/Klimaanlagen verbunden, die als solche bekannt sind und hier nicht weiter beschrieben werden.

Im Allgemeinen wäre es eine optimale Lösung, ein Haus oder eine Wohnung mit einer Fußbodenheizung und einem Kühlsystem über eine Deckenstrahlungsfläche auszustatten.

Die Implementierung von reversiblen Strahlungsdecken ist jedoch insofern interessant, als die Verwendung einer Decke als kalte Strahlungsfläche es ermöglicht, mehr Komfort für die Bewohner eines mit einer solchen Decke ausgestatteten Raumes zu erreichen, als die Verwendung des Bodens als kalte Strahlungsfläche.

In der Tat nimmt der Heizbedarf tendenziell ab und der Kühl- oder Klimatisierungsbedarf im Sommer tendenziell zu. Eine Beheizung über die Decke kann daher ausreichend sein. Außerdem neigt kalte Luft nach dem Kontakt mit einer kalten Deckenfläche dazu, durch natürliche Konvektion abzusteigen. Besonders effizient und komfortabel, vor allem in heißen Perioden, ist es dann, wenn die Räume mit einer reversiblen Strahlungsdecke ausgestattet sind, die eine kalte Oberfläche erzeugt. Eine solche Lösung wäre dann wirtschaftlicher als die Berücksichtigung einer Fußbodenheizung einerseits und einer Kühlung durch die Decke andererseits.

Reversible Strahlungsdecken und insbesondere abgehängte Decken sind bereits bekannt. Allerdings sind diese Decken nicht ohne Nachteile.

So ist z. B. durch EP 3 336 273 eine Decke bekannt, die Zirkulationsrohre für das Wärmeträgermedium und thermische Diffusoren bzw. Wärmeleitbleche umfasst. Die in diesem Dokument beschriebenen Zirkulationsrohre sind nicht in Kontakt mit den thermischen Diffusoren, was die Thermodiffusion wesentlich verändert.

Es ist auch eine abgehängte Decke bekannt, z.B. durch das Dokument EP 2 006 608, die ein Profil umfasst, das dazu bestimmt ist, Wärme von einem Rohr für die Zirkulation eines Wärmeträgermediums zu übertragen und Verkleidungsplatten vom Typ Gipskarton zu tragen. Ein solches System hat jedoch den großen Nachteil, dass es keine Wärmedämmung enthält und es somit nicht möglich ist, den Wärmeverlust nach oben hin zu begrenzen. Eine weitere Deckenverkleidung ohne Wärmedämmung ist aus der EP 0 406 476 A2 bekannt.

Die Aufgabe der vorliegenden Erfindung ist es daher, eine Montagebaugruppen für die Montage einer Heiz-Kühldecke zur Verfügung zu stellen, die die Nachteile des Standes der Technik zumindest teilweise überwindet. Dabei soll die erfindungsgemäße Montagebaugruppe für für die Montage einer Heiz-Kühldecke mit einfachen, leichten und kostengünstigen Komponenten bereitzustellen sein. Eine weitere Aufgabe der vorliegenden Erfindung ist es, eine Heiz-Kühldecke zur Verfügung zu stellen, deren Montage einfach und kostengünstig ist und deren Handhabung besonders einfach ist. Eine weitere Aufgabe der vorliegenden Erfindung ist es, ein Verfahren zur Montage einer Heiz-Kühldecke vorzuschlagen, das einfach und schnell zu realisieren ist, insbesondere von einer Person allein durchzuführen ist.

Die der Erfindung zugrundeliegenden Aufgaben werden durch eine Montagebaugruppe zur Montage einer Heiz-Kühldecke mit den Merkmalen des Anspruchs 1, durch eine Heiz-Kühldecke mit den Merkmalen des Anspruchs 9 sowie durch ein Verfahren mit den Merkmalen des Anspruchs 10 gelöst. Bevorzugte Ausführungsformen der vorliegenden Erfindung sind in den davon jeweils abhängigen Ansprüchen beschrieben.

Dementsprechend stellt die vorliegende Erfindung eine Montagebaugruppe für die Montage einer Heiz-Kühldecke am oberen Teil eines Raums oder am oberen Teil von Räumlichkeiten, wobei die Montagebaugruppe
- Halterungen zur Bildung einer mittels Aufhängungen am oberen Teil des Raums oder der Räumlichkeiten befestigten Tragstruktur,
- Befestigungselementen, die mit den Halterungen in Eingriff bringbar sind,
- Querträger zur Befestigung an den Halterungen mittels der Befestigungselemente, so dass sich die Querträger orthogonal zu den Halterungen erstrecken,
- Hakenelemente zur Befestigung an den Querträgern zwischen den Halterungen,
- mindestens eine Dämmplatte umfassende Baugruppen, wobei die mindestens eine Dämmplatte Bohrungen aufweist, die von den Hakenelementen zumindest teilweise zur Befestigung der mindestens einen Dämmplatte an den Querträgern durchdringbar sind, und
- Haltestifte, die zur Befestigung der Baugruppen an den Querträgern mit den Hakenelementen in Eingriff bringbar sind, umfasst.

Darüber hinaus bezieht sich die vorliegende Erfindung auf eine Heiz-Kühldecke, die mindestens eine erfindungsgemäße Montagebaugruppe, mindestens ein Zirkulationsrohr für das Wärmeträgermedium und vorzugsweise abschließende Verkleidungsplatten umfasst, wobei die Verkleidungsplatten nebeneinander angeordnet und an der Montagebaugruppe befestigt sind, um die mindestens eine Montagebaugruppe und das mindestens eine Zirkulationsrohr zu verdecken. Letztlich bezieht sich die vorliegende Erfindung auch auf ein Verfahren zur Montage einer Heiz-Kühldecke, das die folgenden Stufen umfasst:
- Bilden einer Tragstruktur durch Befestigen eines Primärgerüsts aus Halterungen am oberen Teil eines Raums oder am oberen Teil von Räumlichkeiten mittels Aufhängungen,
- Anordnen von Befestigungselementen an den Halterungen,
- Befestigen von Querträgern an den Halterungen mittels der Befestigungselemente, so dass sich die Querträger orthogonal zu den Halterungen erstrecken,
- Befestigen von nach unten gerichteten Hakenelementen an den Querträgern zwischen den Halterungen,
- Montieren von mindestens eine Dämmplatte umfassenden Baugruppen an den Hakenelementen, die Bohrungen der Dämmplatten zumindest teilweise durchdringen,
- Befestigen der Baugruppen an den Querträgern durch Haltestifte, die mit den Hakenelementen in Eingriff befindlich sind, und
- Einsetzen eines oder mehrere Zirkulationsrohre für das Wärmeträgermedium in die Baugruppen.

In Bezug auf die erfindungsgemäße Montagebaugruppe kann es bevorzugt sein, wenn sie weiter thermischen Diffusoren in Form von Metallplatten umfasst, die an einer Montagefläche der mindestens einen Dämmplatte befestigt sind. Derartige thermische Diffusoren gewährleisten einen verbesserten Wärmeaustausch zwischen einem Wärmeträgermedium und der Umgebung.

Es kann auch bevorzugt sein, wenn die Montagebaugruppe dazu vorgesehen ist, an einer Tragstruktur befestigt zu werden, wobei die Dämmplatte ausgehend von einer Befestigungsfläche in ihrer Dicke ausgebildete Nuten aufweist, die sich entlang definierter Bahnen erstrecken und das Einsetzen mindestens eines Zirkulationsrohrs für das Wärmeträgermedium ermöglichen, und die Metallplatten vorspringende Nuten aufweisen, die in die Nuten der Dämmplatte eingesetzt sind, um so eine Aufnahme für das Zirkulationsrohr des Wärmeträgermediums zu bilden.

Es kann auch von Nutzen sein, wenn die mindestens eine Dämmplatte Nuten aufweist und die Metallplatten mindestens eine Nut aufweist, die sich jeweils entlang definierter Bahnen erstrecken und die das Einführen mindestens eines Zirkulationsrohrs für das Wärmeträgermedium ermöglichen, wobei die Nuten der Metallplatten in die Nuten der mindestens einen Dämmplatte einsetzbar sind und eine Aufnahme für das Zirkulationsrohr begrenzen.

Gemäß einer bevorzugten Ausführungsform der vorliegenden Erfindung haben die Nuten im Querschnitt eine abgerundete "Omega"-Form.

Die Nuten verlaufen vorzugsweise in Längsrichtung und haben einen ersten geradlinigen Abschnitt, der in einen Zwischenabschnitt mündet, der aus einer fortschreitenden und im Wesentlichen symmetrischen Verbreiterung bzw. Verengung der Nut besteht, und sich zu einem zweiten geradlinigen Abschnitt unter Bildung der Nut öffnet, die sich von einem ersten Längsende der Dämmplatte zu einem zweiten Längsende der Dämmplatte erstreckt, wobei die Nut an der Schnittstelle des ersten geradlinigen Abschnitts und des Zwischenabschnitts eine quer verlaufende gekrümmte Verlängerung aufweist, die in einer benachbarten Nut endet, wobei der Abstand zwischen den beiden benachbarten Nuten so gewählt ist, dass er mit einem minimalen Krümmungsradius kompatibel ist, der für Zirkulationsrohr für das Wärmeträgermedium zulässig ist, das zur Aufnahme in den Nuten ausgelegt ist.

Gemäß einer Ausführungsform weist die Dämmplatte in Längsrichtung verlaufende Vorschnittlinien auf, die sich von einem Längsende zum anderen Längsende der Dämmplatte erstrecken und in der unteren Fläche gegenüber der Montagefläche vorgesehen sind, um Schwächungslinien zu bilden, die ein Brechen entlang der Schwächungslinien und somit eine Änderung der Breite der Dämmplatte ermöglichen.

Gemäß einer bevorzugten Ausführungsform der erfindungsgemäßen Montagebaugruppe hat jede Nut, die sich in der Nähe einer Seitenkante der Dämmplatte befindet, einen gekrümmten Verlängerungsabschnitt, der sich bis zur jeweiligen Seitenkante erstreckt, so dass er durch einen anderen gekrümmten Verlängerungsabschnitt einer anderen danebenliegenden Dämmplatte mündet, wodurch eine vollständige gekrümmte Verlängerung wiederhergestellt wird.

Gemäß einem Ausführungsbeispiel ist die Dämmplatte mit Bohrungen versehen, die sich von der Montagefläche zur gegenüberliegenden Unterseite erstrecken, wobei diese Löcher dazu bestimmt sind, zumindest teilweise von Hakenelement durchdrungen zu werden.

Gemäß einer bevorzugten Ausführungsform der vorliegenden Erfindung sind die Haltestifte mit den Hakenelementen in Eingriff bringbar, insbesondere durch Reibung an oder in den Hakenelementen befestigbar. Vorzugsweise umfassen die Haltestifte einen Kopf, der dazu bestimmt ist, auf der Montagefläche aufzuliegen, wenn die Dämmplatte an der Tragstruktur positioniert ist.

Gemäß einem Ausführungsbeispiel der vorliegenden Erfindung weist jede Metallplatte zwei flache Teile auf, die durch eine Nut getrennt sind, die von einer der Flächen der Metallplatte vorsteht, wobei die Nut im Querschnitt eine im Wesentlichen abgerundete Form aufweist, deren Abmessungen so gewählt sind, dass einerseits ihr Einrasten und ihr stabiler Halt durch elastische Verformung in einer Nut der Dämmplatte oder in einer Nut einer anderen Metallplatte über mindestens einen Teil ihrer Länge und andererseits der Kontakt der flachen Teile mit der Montagefläche gewährleistet ist.

Die Metallplatten bestehen z. B. aus Blech mit einer Dicke von vorzugsweise zwischen 2 mm und 4 mm, um der Nut elastische Verformungseigenschaften zu verleihen, die ein vollständiges Einsetzen und Halten, vorzugsweise durch Reibung, in der entsprechenden Nut ermöglichen.

Die Nut hat vorzugsweise eine "Omega"-Form mit einem Querschnitt und einer Tiefe und Breite, die größer als der Durchmesser des Thermofluid-Strömungsrohrs ist, um eine für das Zirkulationsrohr zu bilden.

Gemäß einem Ausführungsbeispiel weist die Nut auf der Höhe der Erstreckungsebene der flachen Teile eine Verengung in Bezug auf die Breite der Nut auf, wodurch das Einsetzen des Fluidzirkulationsrohrs durch Verriegelung und Festhalten des Fluidzirkulationsrohrs ermöglicht wird, sobald es in seine durch die Nut gebildete Aufnahme eingesetzt ist.

Gemäß einem bevorzugten Ausführungsbeispiel umfasst das Verfahren, die so hergestellte Heiz-Kühldecke mit Verkleidungsplatten zu verkleiden, indem diese direkt auf den Halterungen befestigt werden, die zwischen den an den Querträgern aufgehängten Unterbaugruppen sichtbar sind.

In Bezug auf das erfindungsgemäße Verfahren zur Montage einer Heiz-Kühldecke kann es hilfreich sein, wenn die Heiz-Kühldecke mit Verkleidungsplatten verkleidet wird, indem die Verkleidungsplatten direkt an den Halterungen befestigt werden, die zwischen den an den Querträgern eingehängten Baugruppen sichtbar sind.

Nach einem bevorzugten Ausführungsbeispiel werden die Dämmplatten zunächst an die Querträger gehängt und dann die Metallplatten auf der Montagefläche der Dämmplatten montierent, indem die vorstehenden Nuten der jeweiligen Metallplatte in die entsprechenden Nuten der Dämmplatte eingesetzt werden.

Gemäß einem Ausführungsbeispiel umfasst das Verfahren weiter, das/die Zirkulationsrohr(e) für das Wärmeträgermedium in die vorstehenden Nuten der auf den Dämmplatten montierten Metallplatten einzuführen.

Gemäß einem Ausführungsbeispiel umfasst das Verfahren die Verwendung von Metallplatten, die gleichzeitig auf zwei benachbarten Dämmplatten montiert werden, um die Schnittstelle der Dämmplatten abzudecken und so eine mechanische Verbindung zwischen den Dämmplatten zu erzielen.

Gemäß einem Ausführungsbeispiel umfasst das Verfahren die Verwendung von metallischen Endplatten, deren vorstehende Nuten eine gekrümmte Bahn aufweisen, die den gekrümmten Bahnen des Zwischenstücks und der gekrümmten Querverlängerung der in den Dämmplatten vorgesehenen Nuten entspricht.

Ein bemerkenswerter Vorteil der Erfindung liegt in der sehr einfachen Konstruktion einer Heiz-Kühldecke und in der einfachen Durchführung ihres Montageprozesses. Der Vorteil einer erfindungsgemäßen Heiz-Kühldecke liegt tatsächlich in der Einfachheit der Montage, die von einer einzigen Person durchgeführt werden kann. Für die Montage einer solchen Heiz-Kühldecke sind darüber hinaus keine speziellen Werkzeuge erforderlich. Die erfindungsgemäße Heiz-Kühldecke hat außerdem den Vorteil, dass sie mit wenigen Elementen bzw. Bestandteilen, einfachen und kostengünstigen Elementen, leicht und einfach zu handhaben ist. Außerdem ist zum Zusammenbau der Elemente kein Schraubvorgang erforderlich.

Eine erfindungsgemäße Heiz-Kühldecke hat vorteilhaft ein Gewicht von weniger als 25 kg/m2.

Des Weiteren kann eine erfindungsgemäße Heiz-Kühldecke bzw. reversible Strahlungsdecke vorteilhaft mit einem einzigen Zirkulationsrohr für das Wärmeträgermedium ausgeführt werden, das sich in Form eines Mäanders in der Decke erstreckt. Das Fehlen von Verbindungen oder die sehr begrenzte Anzahl von Verbindungen zwischen verschiedenen Elementen des Rohrs ermöglicht es, die Risiken von Leckagen zu begrenzen und somit die Zuverlässigkeit des Systems zu erhöhen.

Die erfindungsgemäße Heiz-Kühldecke hat den Vorteil, dass der hydraulische Kreislauf z.B. einen Anschluss für den Vorlauf und einen Anschluss für den Rücklauf des Wärmeträgermediums bzw. Thermofluids, also zwei Anschlüsse für den gesamten Kreislauf, aufweist. Ein weiterer Vorteil der erfindungsgemäßen Heiz-Kühldecke ist, dass sie ein Wärmedämmmaterial enthält. Der Wärmeverlust nach oben wird dadurch erheblich reduziert.

Die erfindungsgemäße Heiz-Kühldecke sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Halterungen und Querträger mittels Extrusion und die Befestigungselemente, Hakenelemente und Haltestifte mittels Spritzguss herzustellen.

Im Folgenden soll die vorliegende Erfindung unter Bezugnahme auf die in den Figuren dargestellten Ausführungsformen im Detail erläutert. Weitere Merkmale und Vorteile der vorliegenden Erfindung werden dabei aus der folgenden Beschreibung deutlich, die unter Bezugnahme auf die beigefügten Zeichnungen erfolgt, die als nicht einschränkende Beispiele angusehen sind. Dabei zeigen:
Fig. 1 eine perspektivische Ansicht einer beispielhaften Ausführungsform einer Dämmplatte, die ein Element einer Heiz-Kühldecke gemäß einer Ausführungsform der Erfindung bildet,
Fig. 2 ist eine Draufsicht auf die Dämmplatte gemäß Fig. 1,
Fig. 3 ist eine Profilansicht der Dämmplatte aus der Richtung A gemäß Fig. 2,
Fig. 4 ist eine Teilabbildung eines Beispiels für den Zusammenbau einer Tragstruktur, die Halterungen und Querträger umfasst und zur Montage eine Heiz-Kühldecke gemäß einer Ausführungsform der vorliegenden Erfindung einsetzbar ist,
Fig. 5 ist eine Querschnittsansicht eines Details gemäß Fig. 4,
Fig. 6 und Fig. 7 zeigen in perspektivischer Ansicht bzw. in Profilansicht ein Beispiel für ein Hakenelement, das zur Montage an den Querstreben der Heiz-Kühldecke gemäß einer Ausführungsform der vorliegenden Erfindung vorgesehen ist,
Fig. 8, Fig. 9 und Fig. 10 sind Darstellungen, jeweils in der Perspektive, in der Profilansicht und im Längsschnitt, eines Ausführungsbeispiels eines Haltestifts, der dazu bestimmt ist, in ein Hakenelement gemäß Fig. 6 und Fig. 7 einzugreifen und daran befestigt zu werden,
Fig. 11 zeigt ein Beispiel für die Montage eines thermischen Diffusors bzw. Wärmeleit Blechs mit Dämmplatten zur Bildung der erfindungsgemäßen Heiz-Kühldecke gemäß einer Ausführungsform der vorliegenden Erfindung,
Fig. 12 und Fig. 13 sind perspektivische Ansichten, die Beispiele für den Aufbau von thermischen Diffusoren zeigen, die mit den Dämmplatten zusammengebaut werden,
Fig. 14 ist eine Seitenansicht des Ausführungsbeispiels des thermischen Diffusors gemäß Fig. 12,
Fig. 15 ist eine perspektivische Teilansicht einer beispielhaften Ausführungsform einer Baugruppe für eine Heiz-Kühldecke gemäß der vorliegenden Erfindung,
Fig. 16 ist eine Explosionsdarstellung einer Montagebaugruppe für eine Heiz-Kühldecke gemäß einer Ausführungsform der vorliegenden Erfindung; und
Fig. 17 ist perspektivische Ansicht einer beispielhaften Ausführungsform eines Teils einer Heiz-Kühlddecke gemäß der Erfindung.

Strukturell und funktionell gleiche Elemente, die in mehreren verschiedenen Figuren vorkommen, tragen das gleiche Bezugszeichen oder die gleiche alphanumerische Referenz.

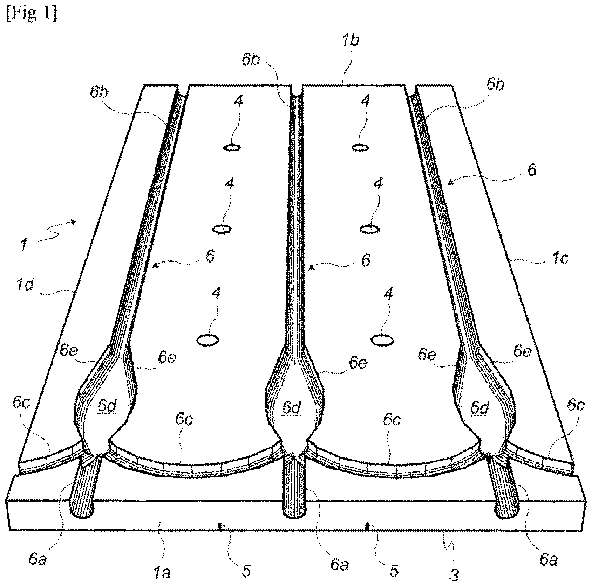

Figur 1 ist eine perspektivische Ansicht eines Ausführungsbeispiels einer Dämmplatte 1 bzw. Isolierplatte 1, die ein Element einer erfindungsgemäßen Montagebaugruppe für eine Heiz-Kühldecke darstellt. Die Dämmplatte 1, vorteilhaft aus EPS oder eine Gipskartonplatte, hat z. B. eine rechteckige Form mit Standardmaßen. Als Beispiel hat die Dämmplatte 1 eine Länge von 1000 mm, eine Breite von 450 mm und eine Dicke von 30 mm.

Die Dämmplatte 1 hat eine Montagefläche 2 bzw. Befestigungsseite 2 und eine der Montagefläche 2 gegenüberliegende Unterseite 3. Vorteilhafterweise ist die Dämmplatte 1 mit Bohrungen 4 versehen, die sich von der Montagefläche 2 bis zur Unterseite 3 erstrecken. Die Bohrungen 4 sind dazu ausgelegt, zumindest teilweise von Hakenelementen durchdrungen zu werden.

Vorteilhafterweise weist die Dämmplatte 1 in Längsrichtung der Dämmplatte 1 verlaufende Vorschnittlinien 5 auf, die sich von einem Längsende 1a zum anderen Längsende 1b der Dämmplatte 1 erstrecken. Die Vorschnittlinien 5sind in der Unterseite 3 über einen Teil der Dicke der Dämmplatte 1 ausgebildet. Die Vorschnittlinien 5bilden somit Schwächungslinien, die einen Bruch entlang dieser Schwächungslinien ermöglichen, wodurch die Breite der Dämmplatte 1 verändert werden kann.

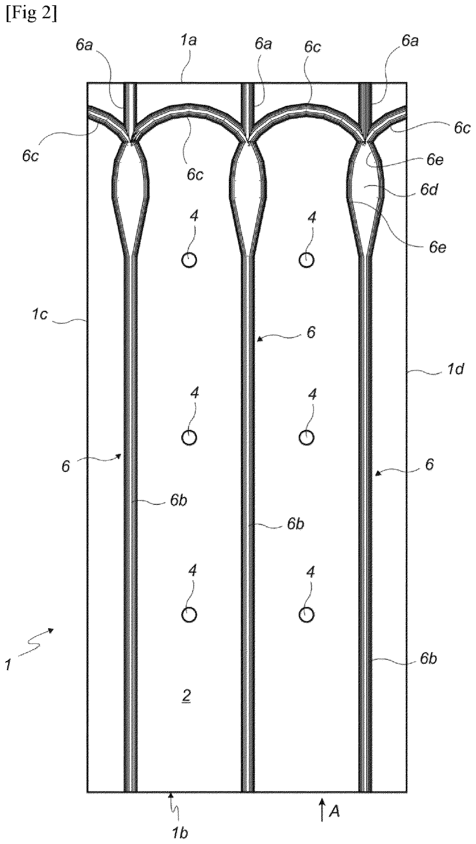

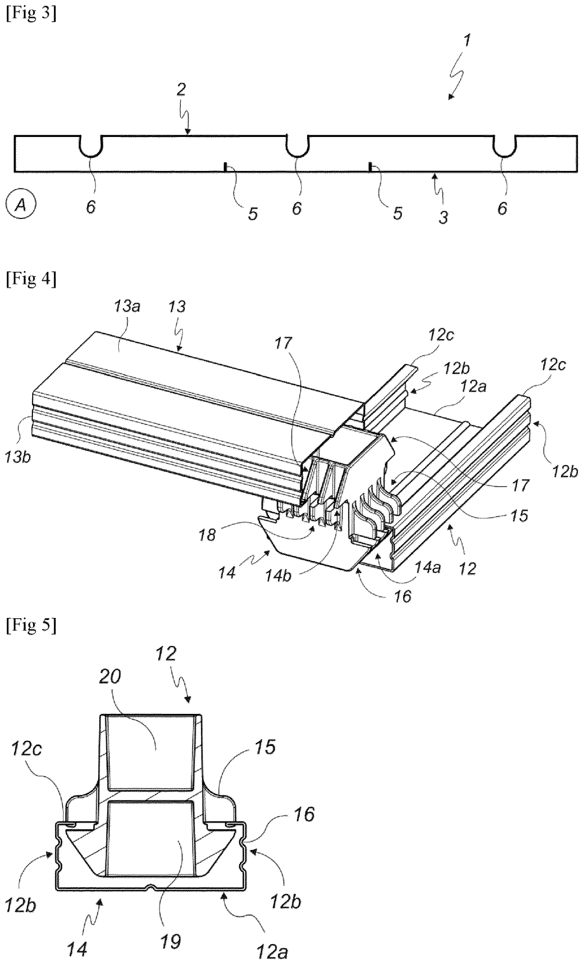

Figur 2 ist eine Draufsicht auf die Dämmplatte 1 gemäß Figur 1 und Figur 3 ist eine Seitenansicht entlang der Richtung A der Dämmplatte 1 gemäß Figur 2.

Die Dämmplatte 1 umfasst sich über einen Teil ihrer Dicke von der Montagefläche 2 aus erstreckende Nuten 6, die sich in Längsrichtung der Dämmplatte 1 erstrecken. Die Längsnuten 6 erstrecken sich dabei entlang definierter Bahnen, die das Einführen mindestens eines Zirkulationsrohres für das Wärmeträgermedium bzw. das Thermofluid ermöglichen. Die Abmessungen der Nuten 6 sind so gewählt, dass sie eine Aufnahme für metallische Wärmediffusoren und für ein Thermofluidumlaufrohr bilden.

Die Nuten 6 haben beispielsweise einen "Omega"-förmigen Querschnitt, um sich der Form eines Zirkulationsrohrs bestmöglich anpassen zu können und die Wärmeübertragung zu optimieren. Das Zirkulationsrohr hat beispielsweise einen Außendurchmesser von 16 mm. Die Dämmplatte 1 wird beispielsweise durch Formen, Schneiden oder Gießen hergestellt und die Längsnuten 6 werden vorzugsweise z. B. durch Schneiden, Sägen oder Fräsen in die Dämmplatte 1 eingebracht.

Die Längsnuten 6 umfassen bevorzugt über einen Teil der Länge der Dämmplatte 1 einen ersten geradlinigen Abschnitt 6a, gefolgt von einem Zwischenabschnitt 6d und in dessen Verlängerung einen zweiten geradlinigen Abschnitt 6b. Der Zwischenabschnitt 6d wird durch eine allmähliche und symmetrische Verbreiterung und Verengung der Nut 6 gebildet, ausgehend vom ersten geradlinigen Abschnitt 6a, und endend im zweiten geradlinigen Abschnitt 6b.

Der Zwischenabschnitt 6d wird seitlich vorzgsweise durch gebogene Seitenwände 6e begrenzt, die eine abgerundete Querschnittsform haben. Der Zwischenabschnitt 6d bildet eine Aussparung. Das Zirkulationsrohr kann dann je nach gewünschter Krümmung an der einen oder anderen gebogenen Seitenwand 6e abgestützt werden oder gerade durch den Zwischenabschnitt 6d verlaufen.

An der Schnittstelle des ersten geraden Abschnitts 6a und des Zwischenabschnitts 6d verbinden quer verlaufende gebogene Verbindungsabschnitte 6c der Nuten 6 benachbarte Nuten 6 miteinander. Die zentrale Nut 6 hat also auf jeder Seite einen gebogenen Verbindungsabschnitt 6c. Jede beidseitig der Mittelnut 6 angeordnete Nut 6 hat auf der einer Seitenkante 1c, 1d der ersten Dämmplatte 1 zugewandten Seite einen gekrümmten Verlängerungsabschnitt 6c, der sich bis zu der jeweiligen Längskante 1c, 1d erstreckt. Bis zur jeweiligen Längskante 1c, 1d erstreckt sich dabei jeweils nur eine Hälfte des Verbindungsabschnitte 6c. Ein gebogener Verbindungsabschnitt 6c einer benachbarten Dämmplatte 1 kann sich dann in Fortsetzung des gebogenen Verlängerungsabschnitts 6c der ersten Dämmplatte 1 erstrecken. Ein vollständiger gebogener Verbindungsabschnitt 6c wird dadurch gebildet, dass zwei Dämmplatten 1 nebeneinandergelegt und die jeweiligen Seitenkanten 1c, 1d der beiden Dämmplatten 1 in Kontakt gebracht werden.

Die Nut 6 erstreckt sich also einerseits geradlinig von Ende zu Ende der Isolierplatte 1 und andererseits auf einer gekrümmten Bahn, wodurch eine Verbindung zu einer benachbarten Nut 6 erzeugt wird. Diese gekrümmte Bahn umfasst also nacheinander eine gekrümmte Wand 6e eines Zwischenabschnitts 6d, eine gekrümmte Verlängerung 6c und eine gekrümmte Wand 6e eines benachbarten Zwischenabschnitts 6d. Ein Zirkulationsrohr kann also entlang einer solchen Bahn positioniert werden.

Alternativ kann sich ein Zirkulationsrohr auch geradlinig in der Isolierplatte 1 erstrecken, indem es im zweiten geradlinigen Abschnitt 6b, im Zwischenabschnitt 6d und im ersten geradlinigen Abschnitt 6a angeordnet ist.

Der Nenn- oder Standardabstand zwischen zwei benachbarten Längsnuten 6 kann vorzugsweise so gewählt werden, dass er mit einem minimal zulässigen Biegeradius für das in den Nuten 6 untergebrachte Zirkulationsrohr vereinbar ist.

Fig. 4 ist eine Ausschnittsabbildung eines Beispiels für eine Ausführungsform einer Tragstruktur, auf der eine Heiz-Kühldecke montiert ist. Die Tragstruktur umfasst Halterungen 12 und Querträger 13. Die Querträger 13 werden mittels Befestigungselementen 14 an den Halterungen 12 befestigt.

Fig. 5 ist eine Querschnittsansicht des Befestigungselements 14, das an der Halterung 12 aus Abbildung 4 montiert ist.

Die Befestigung der Halterungen 12 an einer Grundstruktur oder einer Decke erfolgt z. B. mittels Aufhängungen, die an sich bekannt und daher in den Figuren nicht dargestellt sind.

Die Halterungen 12 haben in ihrer Längserstreckung einen U-förmigen Querschnitt. Dieser umfasst eine untere Befestigungsfläche 12a und zwei davon aufsteigende Wände 12b, die jeweils ein freies Ende haben, das mit einer rechtwinklig zur Innenseite der Halterung 12 gebogenen Kante 12c versehen ist.

Die Querträger 13 haben im Wesentlichen die gleiche Geometrie wie die Halterungen 12, nämlich eine U-Form mit einer Oberseite 13a und zwei Seitenwänden 13b, die jeweils ein freies Ende haben, das mit einer zur Innenseite des Querträgers 13 gebogenen Trägerkante 13c versehen ist. Die Querträger 13 sind in Richtung der Halterungen 12 so angeordnet, dass die Querträgerkanten 13c den Kanten 12c der Halterung 12 zugewandt sind.

Die Befestigungselemente 14 sind Bauteile, z. B. aus Kunststoff, die jeweils aus einem Unterteil und einem Oberteil aufgebaut sind. Das Unterteil umfasst an jeder Querseite einen Schlitz 14a, in den die entsprechende Kante 12c der Halterung 12 eingreift, wenn das Befestigungselement 14 durch Einbringen in die Halterung 12 montiert wird.

Das Oberteil weist an jeder Längsseite einen komplementären Schlitz 14b auf, in den die entsprechende Querträgerkante 13c des Querträgers 13 eingreift, wenn dieser orthogonal zur Längsrichtung der Halterungen 12 an dem Befestigungselement 14 verschiebbar montiert ist. Der Schlitz 14a und der komplementäre Schlitz 14b sind daher orthogonal zueinander ausgerichtet. Der Schlitz 14a wird beispielsweise durch eine Sequenz von oberen Seitenrippen 15 und unteren Rippen 16 begrenzt und der komplementäre Schlitz 14b wird z. B. durch eine Sequenz von oberen Längsrippen 17 und unteren Längsrippen 18 begrenzt. Eine solcher Aufbau, der beispielsweise mittels Spritzguss erhältlich ist, in Verbindung mit hohlen Mittelteilen 19 und 20 reduziert die Menge des für die Herstellung des Befestigungselements 14 erforderlichen Kunststoffs und damit deren Kosten und das Gewicht der Heiz-Kühldecke erheblich.

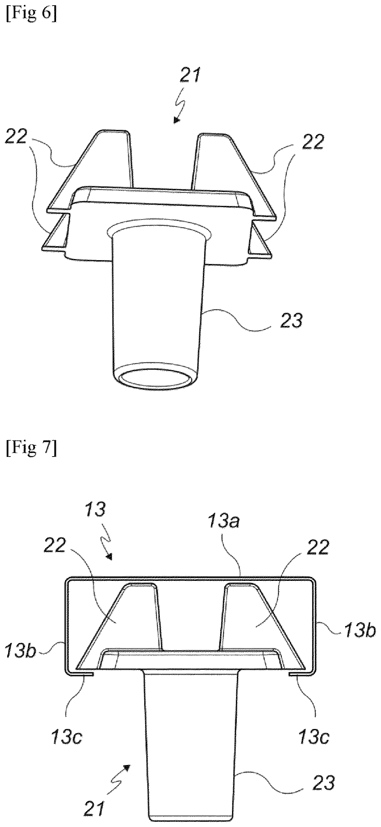

Zur Befestigung der Dämmplatten 1 an den Querträgern 13 dienen Hakenelemente 21, die an den Querträgern 13 montiert sind. Fig. 6 und Fig. 7 zeigen in perspektivischer Darstellung bzw. in Vorderansicht ein Beispiel für den Aufbau eines Hakenelements 21. Die Hakenelemente 21 sollen dazu dienen, an den Querträgern 13 in ausreichender Anzahl montiert zu werden, um das Gewicht der Baugruppen, die jeweils eine Dämmplatte 1 und Metallplatten 7 umfassen, zu tragen, wobei dieses Gewicht durch einen Teil des Gewichts des in den Nuten 8 untergebrachten Rohrs für die Zirkulation des Wärmeträgermediums und durch das Gewicht des in diesem Teil des Rohrs enthaltenen Wärmeträgermediums zusätzlich erhöht wird.

Das Hakenelement 21 ist aus einem Oberteil, der längliche Hakenrippen 22 umfasst, und einem rohrförmigen Segment 23 im unteren Bereich aufgebaut. Das Oberteil ist vorteilhaft in die Querträger 13 eingesetzt und die Längsrippen 22 sind so dimensioniert, dass sie auf den Querträgerkanten 13c aufliegen. Das rohrförmige Segment 23 ragt von der Unterseite des Querträgers 13 ab und ist dazu bestimmt, zumindest teilweise eine Bohrung 4 in der Dämmplatte 1 zu durchdringen.

Zur Befestigung der Dämmplatten 1 an den Querträgern 13 dienen außerdem Haltestifte 24, die mit den Hakenelementen 21 zusammenwirken.

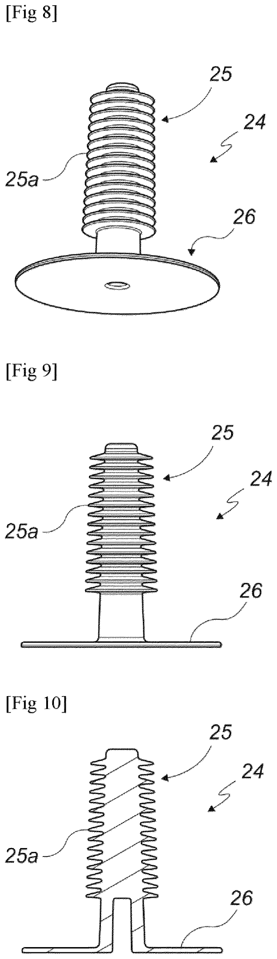

Die Figuren 8, 9 und 10 sind Darstellungen, jeweils in der Perspektive, in der Profilansicht und im Längsschnitt, eines Beispiels einer Ausführungsform des Haltestifts 24, der dazu bestimmt ist, durch Reibung oder Verrastung in oder an dem entsprechenden Hakenelement 21 anzugreifen.

Dazu hat der Haltestift 24 einen zylindrischen Abschnitt 25, der mit radialen Rippen 25a versehen ist. Diese werden vorzugsweise verformt, wenn der zylindrische Abschnitt 25 in das entsprechende rohrförmige Segment 23 des Halteelements 21 angeführt wird. Der Haltestift 24 umfasst weiter einen Kopf 26, z. B. in Form einer Scheibe, der dazu bestimmt ist, auf der Montagefläche 2 aufzuliegen, nachdem die Dämmplatte 1 unter den Querträgern 13 montiert und das rohrförmige Segment 23 in die Bohrung 4 eingeführt wurde.

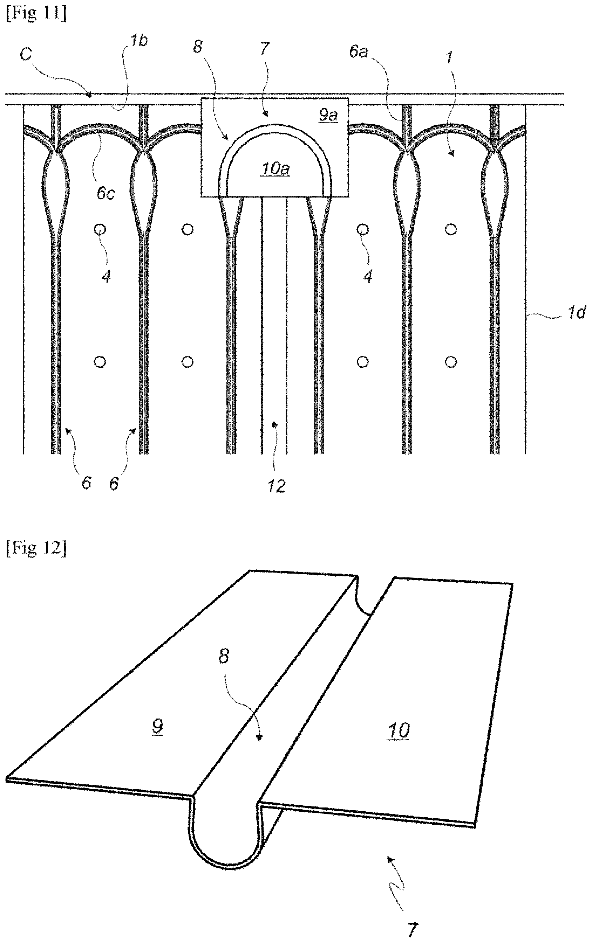

Fig. 12, Fig. 13 und Fig. 14 sind Ansichten, die Beispiele für Ausführungsformen von thermischen Diffusoren bzw. Wärmeleitblechen zeigen, die dazu bestimmt sind, mit den Dämmplatten 1 zusammengebaut zu werden, um eine Baugruppe für eine Heiz-Kühldecke gemäß der vorliegenden Erfindung zu bilden.

Die thermischen Diffusoren sind als Metallplatten 7 ausgebildet, die an der Montagefläche 2 befestigt sind. Jede Metallplatte 7, die beispielsweise in Abbildung 12 dargestellt ist, hat eine vorspringende Nut 8, die dazu bestimmt ist, in eine Nut 6 der Dämmplatte 1 eingesetzt zu werden, um eine Aufnahme für ein Zirkulationsrohr für das Wärmeträgermedium zu bilden.

Die Metallplatte 7 weist zwei flache Teile 9 und 10 auf, die durch die Nut 8 getrennt sind, die aus einer Seite der Metallplatte 7 herausragt. Die Nut 8 hat in Querrichtung eine im Wesentlichen abgerundete Form, vorzugsweise eine "Omega"-Form, deren Abmessungen so gewählt sind, dass ein Eingreifen und ein stabiles Festhalten durch elastische Verformung in einer Nut 6 der Dämmplatte 1 gewährleistet ist. Nach dem Aufsetzen auf die Montagefläche 2 liegen die Flachteile 9 und 10 an der Montagefläche 2 an. Darüber hinaus kann die Nut 8 der Metallplatte 7 über einen Teil ihrer Länge teilweise in eine Nut 8 einer benachbarten Metallplatte 7 eingreifen. Zwei Metallplatten 7 werden dann teilweise übereinandergelegt, wodurch der mechanische Zusammenhalt der Baugruppe verbessert wird.

Die Metallplatten 7 bestehen bevorzugt aus einem Blech mit einer Dicke von vorzugsweise zwischen 2 mm und 4 mm, um der Nut 8 eine elastische Deformierbarkeit zu verleihen, die es ermöglicht, sie vollständig in die entsprechende Nut 6 oder in eine andere Nut 8 einzuführen und durch Reibung zu halten. Die Nut 8 hat eine Tiefe und Breite, die größer ist als der Durchmesser des Zirkulationarohrs, um eine Aufnahme für das Zirkulationarohr für das Wärmeträgermedium zu bilden.

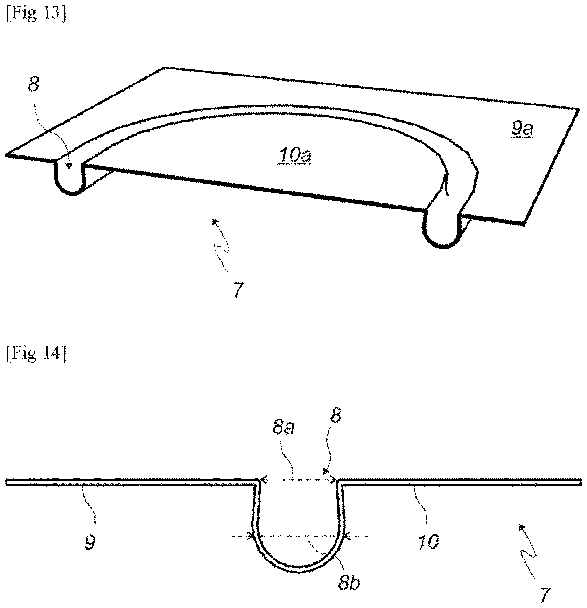

Fig. 14 ist eine Seitenansicht des Ausführungsbeispiels des thermischen Diffusors gemäß Fig. 12. Die Nut 8 hat vorteilhafterweise auf der Höhe der Erstreckungsebene ihrer flachen Teile 9 und 10, vorzugsweise symmetrisch, eine Verengung 8a in der Breite im Vergleich zur Breite des Teils 8b der Nut 8, auf der Höhe ihres die Aufnahme bildenden Teils. Diese "Omega"-Form gewährleistet somit das Einsetzen des Zirkulationsrohrs für das Wärmeträgermedium durch Einklipsen und ermöglicht das Festhalten des Zirkulationsrohrs für das Wärmeträgermedium, sobald dieses fest in die Nut 8, die dessen Aufnahme bildet, eingesetzt ist. Die "Omega"-Form ermöglicht es, die Aufnahme für das Zirkulationsrohr für das Wärmeträgermedium so genau wie möglich an die Form des Rohrs anzupassen und so die Wärmeübertragung zu optimieren.

In der in Fig. 11 dargestellten Ausführungsform umfasst die Metallplatte 7 eine C-förmige Umlenkung. Die Dämmplatten 1 haben ein Längsende 1b, das vorzugsweise in Kontakt mit der C-förmigen Umlenkung steht. Die Halterungen 12 erstrecken sich jedoch nicht bis zur C-förmigen Umlenkung. Der zwischen dem Längsende der Halterung 12 und der C-förmigen Umlenkung vorhandene Raum ermöglicht die Positionierung einer metallischen Endplatte 7, deren gebogene Nut 8 durch diesen Raum verläuft. So kann ein Zirkulationsrohr für das Wärmeträgermedium in der Nut 8 untergebracht werden und von einer Dämmplatte 1 zu einer benachbarten Dämmplatte 1 geführt werden. Die metallische Endplatte 7 hat vorteilhaft einen äußeren flachen Teil 9a, außerhalb des Verlaufs der Nut 8 und einen inneren flachen Teil 10a, innerhalb des Verlaufs der Nut 8. Der äußere flache Teil 9a hat vorteilhafterweise ausreichende Abmessungen, um die C-förmige Umlenkung zumindest teilweise abzudecken und so die Verbindung zwischen dem Längsende der Halterung 12 und der C-förmigen Umlenkung herzustellen.

Fig. 13 zeigt detaillierter ein Beispiel für eine metallische Endplatte 7 mit einer herausragenden Nut 8, die sich in einer gekrümmten Bahn erstreckt, die deckungsgleich mit der gekrümmten Verlängerung 6c einer Nut 6 ist. Die äußeren und inneren flachen Teile 9a und 10a erstrecken sich auf beiden Seiten der Nut 8.

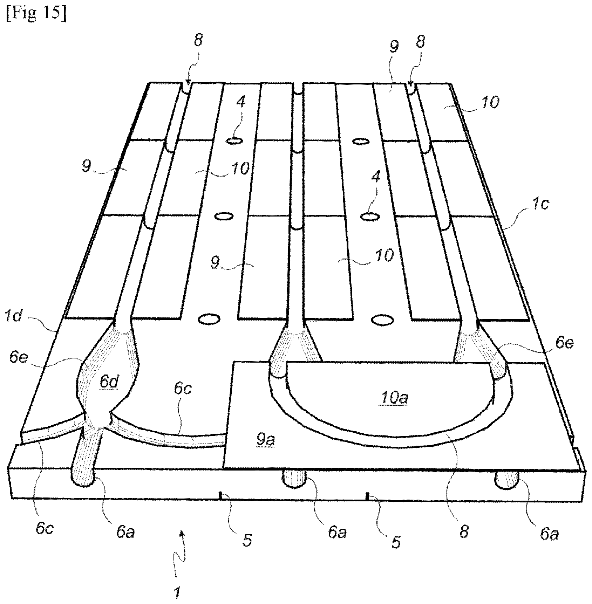

Fig. 15 ist eine perspektivische Ansicht einer Teilausführung eines Ausführungsbeispiels einer Baugruppe für eine Heiz-Kühldecke gemäß der vorliegenden Erfindung. Die Baugruppe hat z. B. eine Standardlänge von 1000 mm und eine Standardbreite von 450 mm. Die vorgenannte Länge und Breite kann selbstverständlich modifiziert werden, ohne den Rahmen der vorliegenden Erfindung zu verlassen, z. B. zur Anpassung an besondere Randbedingungen. Die Breite kann z. B. durch Schneiden der Dämmplatten 1 entlang der Vorschnittlinien 5 angepasst werden.

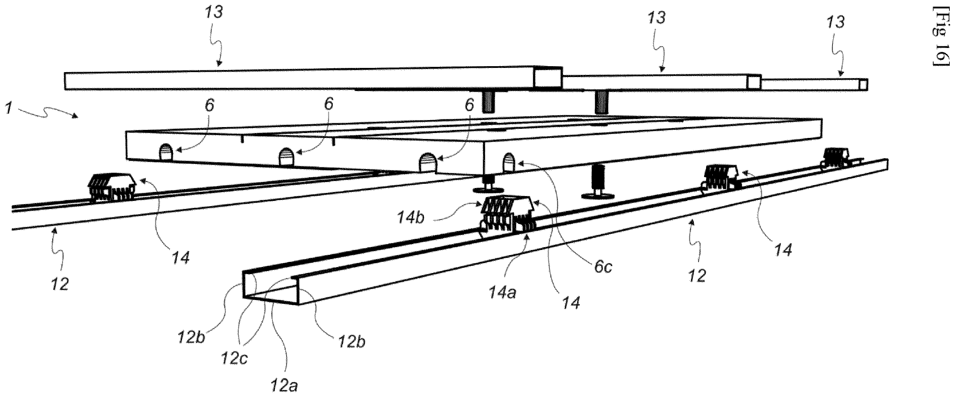

Fig. 16 ist eine Explosionsdarstellung eines Beispiels für einen Teilaufbau einer exemplarischen Heiz-Kühldecke gemäß der vorliegenden Erfindung. Die Heiz-Kühldecke umfasst insbesondere die Halterungen 12, die an den Halterungen 12 durch die Befestigungselemente 14 befestigten Querträger 13, den an den Querträgern 13 montierten Halteelementen 21, die zumindest teilweise die Bohrungen 4 der Dämmplatte 1 durchdringen, und die in die Halteelemente 21 vorzugsweise kraftschlüssig eingreifenden Haltestifte 24, um die Dämmplatte 1 mit ihren Metallplatten 7 und dem nicht dargestellten Rohr für die Zirkulation des Wärmeträgermediums zu halten.

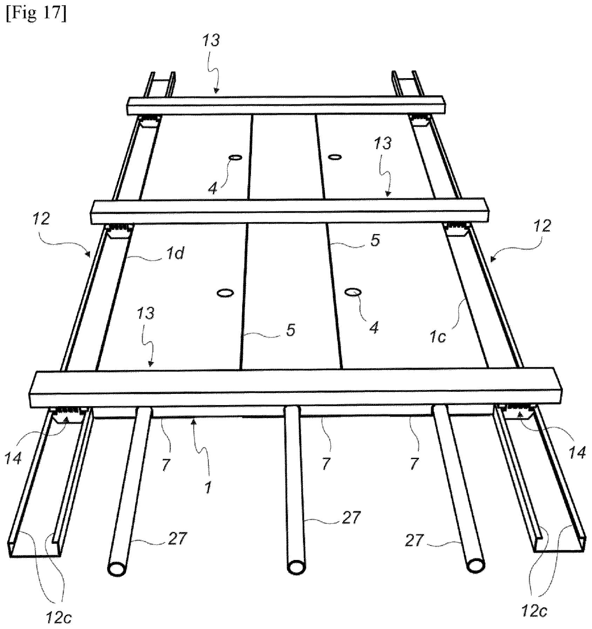

Fig. 17 ist eine perspektivische Draufsicht auf einen teilweisen Aufbau einer Heiz-Kühldecke gemäß einer Ausführungsform der vorliegenden Erfindung.

Gemäß einer bevorzugten Ausführungsform hat die Dämmplatte 1 weitere Vorschnittlinien oder Markierungslinien, die orthogonal zu den Vorschnittlinien 5 verlaufen. Die Länge der Dämmplatte 1 kann dann ebenfalls leicht angepasst werden.

In den Nuten 8, die ihrerseits in den Nuten 6 der benachbarten Dämmplatten 1 untergebracht sind, ist ein Zirkulationsrohr 27 für das Wärmeträgermedium aufgenommen.

Die vorliegende Erfindung bezieht sich auch auf ein Verfahren zur Montage der Heiz-Kühldecke. Gemäß einem Ausführungsbeispiel umfasst dieses Verfahren die folgenden Schritte: Eine Tragstruktur wird gebildet, indem ein Gerüst in Form von Halterungen 12 mit Hilfe von Aufhängern am oberen Teil eines Raums oder einer Fläche befestigt wird. Anschließend werden die Befestigungselemente 14 in die Halterungen 12 eingebracht. Die Querträger 13 werden dann über die Befestigungselemente 14 an den Halterungen 12 befestigt, so dass die Querträger 13 orthogonal zu den Halterungen 12 verlaufen. Anschließend werden die nach unten gerichteten Hakenelemente 21 an den Querträgern 13 befestigt.

Baugruppen, wie oben beschrieben, werden dann an den Hakenelementen 21 montiert, wobei die Hakenelemente 21 die Baugruppen zumindest teilweise durchdringen, und die Baugruppen werden an den Querträgern 13 durch Haltestifte 24, die in die Hakenelemente 21 eingreifen und darin gehalten werden, in Position gehalten. In den Baugruppen wird dann mindestens ein Zirkulationsrohr 27 für das Wärmeträgermedium installiert.

Gemäß einem Ausführungsbeispiel umfasst das Verfahren, die so hergestellte Heiz-Kühldecke mit Verkleidungsplatten zu verkleiden, indem diese direkt an den Halterungen 12 befestigt werden, die zwischen den an den Querträgern 13 aufgehängten Baugruppen sichtbar sind. Die Verkleidungsplatten sind beispielsweise Gipskartonplatten.

Gemäß einem Ausführungsbeispiel werden die Dämmplatten 1 zunächst an den Querträgern 13 eingehängt und anschließend die Metallplatten 7 auf die Montagefläche 2 der Dämmplatten 1 montiert, z. B. durch Einsetzen der Nuten 8 in die entsprechenden Nuten 6.

Gemäß einem Ausführungsbeispiel umfasst das Verfahren, das oder die Zirkulationsrohre 27 für das Wärmeträgermedium in die Nuten 8 der auf den Isolierplatten 1 montierten Metallplatten 7 einzuführen.

Gemäß einem weiteren Ausführungsbeispiel umfasst das Verfahren weiter, Metallplatten 7 zu verwenden, die gleichzeitig auf zwei Dämmplatten 1 montiert werden, die an einem ihrer jeweiligen Längsenden 1a, 1b verbunden sind, um die Schnittstelle der Isolierplatten 1 abzudecken und so eine mechanische Verbindung zwischen den Isolierplatten 1 zu erreichen.

Gemäß einem Ausführungsbeispiel umfasst das Verfahren weiter die Verwendung von metallischen Endplatten 7, deren Nuten 8 eine gekrümmte Bahn aufweisen, die zu den Bahnen der gekrümmten Verlängerung 6c und der Wände 6e der Zwischenabschnitte 6d passen.

Die erfindungsgemäße Heiz-Kühldecke umfasst somit eine Tragstruktur aus den Halterungen 12 und den Querträgern 13, eine Baugruppe wie oben beschrieben, mindestens ein Zirkulationsrohr 27 für das Wärmeträgermedium und vorzugsweise nicht dargestellte Verkleidungsplatten, die nebeneinander angeordnet und an der Tragstruktur befestigt sind, um die Baugruppen und das mindestens eine Wärmeträgerfluid-Zirkulationsrohr zu verdecken.

Die Verkleidungsplatten werden vorteilhaft direkt an der Befestigungsfläche 12a der Halterungen 12 befestigt.

Die vorliegende Erfindung wurde exemplarisch unter Bezugnahme auf die in den Figuren dargestellten Ausführungsformen der vorliegenden Erfindung im Detail beschrieben. Es versteht sich, dass die vorliegende Erfindung nicht auf die in den Figuren dargestellte Ausführungsform beschränkt ist, sondern sich der Umfang der vorliegenden Erfindung aus den beigefügten Ansprüchen ergibt.

## Patentansprüche

1. Montagebaugruppe für die Montage einer Heiz-Kühldecke am oberen Teil eines Raums oder am oberen Teil von Räumlichkeiten, umfassend:
- Halterungen (12) zur Bildung einer mittels Aufhängungen am oberen Teil des Raums oder der Räumlichkeiten befestigten Tragstruktur,
- Befestigungselemente (14), die mit den Halterungen (12) in Eingriff bringbar sind,
- Querträger (13) zur Befestigung an den Halterungen (12) mittels der Befestigungselemente (14), so dass sich die Querträger (13) orthogonal zu den Halterungen (12) erstrecken,
- Hakenelemente (21) zur Befestigung an den Querträgern (13) zwischen den Halterungen (12),
**dadurch gekennzeichnet, dass** die Montagebaugruppe weiterhin folgende Merkmale umfasst:
- mindestens eine Dämmplatte (1) umfassende Baugruppen, wobei die mindestens eine Dämmplatte (1) Bohrungen (4) aufweist, die von den Hakenelementen (21) zumindest teilweise zur Befestigung der mindestens einen Dämmplatte (1) an den Querträgern (13) durchdringbar sind, und
- Haltestifte (24), die zur Befestigung der Baugruppen an den Querträgern (13) mit den Hakenelementen (21) in Eingriff bringbar sind.

2. Montagebaugruppe nach Anspruch 1, **dadurch gekennzeichnet, dass** die Montagebaugruppe weiter thermischen Diffusoren in Form von Metallplatten (7) umfasst, die an einer Montagefläche (2) der mindestens einen Dämmplatte (1) befestigt sind.

3. Montagebaugruppe nach Anspruch 2, **dadurch gekennzeichnet, dass** die mindestens eine Dämmplatte (1) Nuten (6) aufweist und die Metallplatten (7) mindestens eine Nut (8) aufweist, die sich jeweils entlang definierter Bahnen erstrecken und die das Einführen mindestens eines Zirkulationsrohrs (27) für das Wärmeträgermedium ermöglichen, wobei die Nuten (8) der Metallplatten (7) in die Nuten (6) der mindestens einen Dämmplatte (1) einsetzbar sind und eine Aufnahme für das Zirkulationsrohr (27) begrenzen.

4. Montagebaugruppe nach Anspruch 3, **dadurch gekennzeichnet, dass** die Nuten (6) in Längsrichtung verlaufen und einen ersten geradlinigen Abschnitt (6a) aufweisen, der in einen Zwischenabschnitt (6d) mündet, der jeweils aus einer fortschreitenden und im Wesentlichen symmetrischen Verbreiterung und Verengung der Nut (6) besteht, und sich zu einem zweiten geradlinigen Abschnitt (6b) unter Bildung der Nut (6) öffnet, die sich von einem ersten Längsende (1a) der Dämmplatte (1) zu einem zweiten Längsende (1b) der Dämmplatte (1) erstreckt, wobei die Nut (6) an der Schnittstelle des ersten geradlinigen Abschnitts (6a) und des Zwischenabschnitts (6d) eine quer verlaufende gekrümmte Verlängerung (6c) aufweist, die in einer benachbarten Nut (6) endet, wobei der Abstand zwischen den beiden benachbarten Nuten (6) so gewählt ist, dass er mit einem minimalen Krümmungsradius kompatibel ist, der für Zirkulationsrohr (27) für das Wärmeträgermedium zulässig ist, das zur Aufnahme in den Nuten (6) ausgelegt ist.

5. Montagebaugruppe nach einem der Ansprüche 1 bis 4, **dadurch gekennzeichnet, dass** die Dämmplatte (1) in Längsrichtung verlaufende Vorschnittlinien (5) aufweist, die sich von einem Längsende (1a) zum anderen Längsende (1b) der Dämmplatte (1) erstrecken und in der unteren, der Montagefläche (2) gegenüberliegenden Fläche (3) ausgebildet sind, um Schwächungslinien zu bilden, die einen Bruch entlang der Schwächungslinien ermöglichen und somit eine Änderung der Breite der Dämmplatte (1) ermöglichen.

6. Montagebaugruppe nach einem der Ansprüche 4 bis 6, **dadurch gekennzeichnet, dass** jede in der Nähe einer Seitenkante (1c, 1d) der Dämmplatte (1) befindliche Nut (6) einen gekrümmten Verlängerungsabschnitt (6c) aufweist, der sich bis zu der jeweiligen Seitenkante (1c, 1d) erstreckt, so dass er in einem weiteren gekrümmten Verlängerungsabschnitt (6c) einer anderen danebenliegenden Dämmplatte (1) mündet, wodurch eine vollständige gekrümmte Verlängerung (6c) gebildet wird.

7. Montagebaugruppe nach einem der Ansprüche 1 bis 6, **dadurch gekennzeichnet, dass** die Nut (8) der Metallplatte (7) im Querschnitt eine "Omega"-Form und eine Tiefe und Breite aufweist, die größer als der Durchmesser des Zirkulationsrohrs (27) für das Wärmeträgermedium ist, um eine Aufnahme für das Zirkulationsrohr (27) zu bilden.

8. Montagebaugruppe nach einem der Ansprüche 1 bis 7, **dadurch gekennzeichnet, dass** die Bohrungen (4) der Dämmplatte (1) durchgehend von der Montagefläche (2) zur gegenüberliegenden unteren Seite (3) erstrecken, wobei die Bohrungen (4) dazu ausgelegt sind, zumindest teilweise von den Hakenelementen (21) durchdrungen zu werden.

9. Heiz-Kühldecke, die mindestens eine Montagebaugruppe nach einem der Ansprüche 1 bis 8, mindestens ein Zirkulationsrohr (27) für das Wärmeträgermedium und vorzugsweise abschließende Verkleidungsplatten umfasst, wobei die Verkleidungsplatten nebeneinander angeordnet und an der Montagebaugruppe befestigt sind, um die mindestens eine Montagebaugruppe und das mindestens eine Zirkulationsrohr (27) zu verdecken.

10. Verfahren zur Montage einer Heiz-Kühldecke, das die folgenden Stufen umfasst:
- Bilden einer Tragstruktur durch Befestigen eines Primärgerüsts aus Halterungen (12) am oberen Teil eines Raums oder am oberen Teil von Räumlichkeiten mittels Aufhängungen,
- Anordnen von Befestigungselementen (14) an den Halterungen (12),
- Befestigen von Querträgern (13) an den Halterungen (12) mittels der Befestigungselemente (14), so dass sich die Querträger (13) orthogonal zu den Halterungen (12) erstrecken,
- Befestigen von nach unten gerichteten Hakenelementen (21) an den Querträgern (13) zwischen den Halterungen (12),
**dadurch gekennzeichnet, dass** das Verfahren weiterhin die folgenden Stufen umfasst:
- Montieren von mindestens eine Dämmplatte (1) umfassenden Baugruppen an den Hakenelementen (21), die Bohrungen (4) der Dämmplatten (1) zumindest teilweise durchdringen,
- Befestigen der Baugruppen an den Querträgern (13) durch Haltestifte (24), die mit den Hakenelementen (21) in Eingriff befindlich sind, und
- Einsetzen eines oder mehrere Zirkulationsrohre (27) für das Wärmeträgermedium in die Baugruppen.

11. Verfahren nach Anspruch 10, **dadurch gekennzeichnet, dass** die Heiz-Kühldecke mit Verkleidungsplatten verkleidet wird, indem die Verkleidungsplatten direkt an den Halterungen (12) befestigt werden, die zwischen den an den Querträgern (13) eingehängten Baugruppen sichtbar sind.

12. Verfahren nach Anspruch 10 oder 11, **dadurch gekennzeichnet, dass** die Dämmplatten (1) zunächst an die Querträger (13) gehängt werden und dann Metallplatten (7) auf einer Montagefläche (2) der Dämmplatten (1) durch Einsetzen von vorstehenden Nuten (8) der jeweiligen Metallplatte (7) in entsprechende Nuten (6) der Dämmplatte (1) montiert werden.

13. Verfahren nach Anspruch 12, **dadurch gekennzeichnet, dass** die Rohre (27) zur Zirkulation eines Wärmeträgermediums in die Nuten (8) der auf den Dämmplatten (1) montierten Metallplatten (7) eingeführt werden.

14. Verfahren nach Anspruch 12 oder 13, **dadurch gekennzeichnet, dass** es die Verwendung von Metallplatten (7) umfasst, die gleichzeitig mit zwei benachbarten Dämmplatten (1) verbunden werden, um so eine mechanische Verbindung zwischen den Dämmplatten (1) zu erzeugen.

15. Verfahren nach einem der Ansprüche 10 bis 14, **dadurch gekennzeichnet, dass** es die Verwendung von Metallplatten (7) umfasst, deren Nuten (8) eine gekrümmte Bahn aufweisen, die den gekrümmten Bahnen eines Zwischenabschnitts (6d) und/oder einer gekrümmten Querverlängerung (6c) der in den Dämmplatten (1) vorgesehenen Nuten (6) entsprechen.

## Claims

1. Mounting assembly for installing a cooling-heating ceiling on the upper part of a room or on the upper part of premises, comprising:
- retaining elements (12) for forming a support structure attached to the upper part of the room or premises by means of suspension elements,
- fastening elements (14) which can be brought into engagement with the retaining elements (12),
- cross-members (13) for attachment to the retaining elements (12) by means of fastening elements (14), so that the cross-members (13) extend perpendicularly to the retaining elements (12),
- hook elements (21) for attachment to the cross-members (13) between the retaining elements (12),
**characterized in that** the mounting assembly further comprises the following features:
- assemblies comprising at least one insulating panel (1), wherein the at least one insulating panel (1) comprises holes (4) which can be penetrated at least in part by the hook elements (21) for fastening the at least one insulating panel (1) to the cross-members (13), and
- retaining pins (24) which can be brought into engagement with the hook elements (21) to secure the assemblies to the cross-members (13).

2. Mounting assembly according to claim 1, **characterized in that** the mounting assembly further comprises thermal diffusers in the form of metal plates (7) which are attached to a mounting surface (2) of the at least one insulating panel (1).

3. Mounting assembly according to claim 2, **characterized in that** the at least one insulating panel (1) comprises grooves (6) and the metal plates (7) comprise at least one groove (8) which respectively extend along defined paths and allow the introduction of at least one flow tube (27) for the heat transfer medium, wherein the grooves (8) of the metal plates (7) are insertable into the grooves (6) of the at least one insulating panel (1) and delimit a receptacle for the flow tube (27).

4. Mounting assembly according to claim 3, **characterized in that** the grooves (6) extend in the longitudinal direction and comprise a first rectilinear portion (6a) which opens into an intermediate portion (6d), which in each case consists of a progressive and substantially symmetrical widening and narrowing of the groove (6), and which opens into a second rectilinear portion (6b) forming the groove (6) which extends from a first longitudinal end (1a) of the insulating panel (1) to a second longitudinal end (1b) of the insulating panel (1), wherein the groove (6) has, at the interface between the first straight portion (6a) and the intermediate portion (6d), a transversely extending curvilinear extension (6c) which terminates in an adjacent groove (6), wherein the distance between the two adjacent grooves (6) is selected so as to be compatible with a minimum permissible radius of curvature for the circulation tube (27) for the heat transfer medium, which is designed to be accommodated in the grooves (6).

5. Mounting assembly according to any one of claims 1 to 4, **characterized in that** the insulating panel (1) has precut lines (5) running in the longitudinal direction, which extend from one longitudinal end (1a) to the other longitudinal end (1b) of the insulating panel (1) and which are formed in the lower surface (3) opposite the mounting surface (2) to form weakening lines which allow a rupture along the lines of weakness and thus allow a change in the width of the insulating panel (1).

6. Mounting assembly according to any one of claims 4 to 6, **characterized in that** each groove (6) located in the vicinity of a side edge (1c, 1d) of the insulating panel (1) has a curved extension portion (6c) which extends as far as the respective side edge (1c, 1d), so as to open out into another curvilinear extension portion (6c) of another insulating panel (1) located next to it, whereby a complete curvilinear extension (6c) is formed.

7. Mounting assembly according to any one of claims 1 to 6, **characterized in that** the groove (8) of the metal plate (7) has an "omega" shape in cross-section and a depth and width greater than the diameter of the flow tube (27) for the heat transfer medium to form a receptacle for the flow tube (27).

8. Mounting assembly according to any one of claims 1 to 7, **characterized in that** the holes (4) in the insulating panel (1) extend continuously from the mounting surface (2) to the opposite bottom side (3), wherein the holes (4) are designed to be at least partially penetrated by the hook elements (21).

9. Cooling-heating ceiling, which comprises at least one mounting assembly according to any one of claims 1 to 8, at least one circulation tube (27) for the heat transfer medium and preferably terminating facing panels, wherein the facing panels are arranged next to one another and fastened to the mounting assembly to conceal the at least one mounting assembly and the at least one circulation tube (27).

10. Method of installing a cooling heating ceiling, comprising the following steps:
- forming a load-bearing structure by fastening a primary framework made up of retaining elements (12) to the upper part of a room or to the upper part of premises, by means of suspension elements,
- arrangement of fastening elements (14) on the retaining elements (12), fastening cross-members (13) to the retaining elements (12) by means of fastening elements (14), so that the cross-members (13) extend perpendicularly to the retaining elements (12),
- attachment of downward-facing hook elements (21) to the cross-members (13) between the retaining elements (12),
**characterized in that** the process further comprises the following steps:
- mounting of assemblies comprising at least one insulating panel (1) on hook elements (21) which at least partially penetrate holes (4) in the insulating panels (1),
- fastening the assemblies to the cross-members (13) by means of retaining pins (24) which are engaging with the hook elements (21), and
- insertion of one or more circulation tubes (27) for the heat transfer medium into the assemblies.

11. Method according to claim 10, **characterized in that** the cooling-heating ceiling is covered with facing panels by fixing the facing panels directly to the retaining elements (12) which are visible between the assemblies hooked to the cross-members (13).

12. Method according to claim 10 or 11, **characterized in that** the insulating panels (1) are first suspended from the cross-members (13) and then the metal plates (7) are mounted on a mounting surface (2) of the insulating panels (1) by inserting projecting grooves (8) of the respective metal plate (7) into corresponding grooves (6) of the insulating panel (1).

13. Method according to claim 12, **characterized in that** the tubes (27) for circulating a heat transfer medium are inserted into the grooves (8) of the metal plates (7) mounted on the insulating panels (1).

14. Method as claimed in claim 12 or 13, **characterized in that** it comprises the use of metal plates (7) which are simultaneously connected to two adjacent insulating panels (1) to thereby establish a mechanical connection between the insulating panels (1).

15. Method according to any one of claims 10 to 14, **characterized in that** it comprises the use of metal plates (7) whose grooves (8) have a curvilinear course, which correspond to the curvilinear courses of an intermediate part (6d) and/or of a curvilinear transverse extension (6c) of the grooves (6) provided in the insulating panels (1).

## Revendications

1. Module de montage pour le montage d'un plafond chauffant rafraîchissant sur la partie supérieure d'une pièce ou sur la partie supérieure de locaux, comprenant :
- des éléments de retenue (12) destinés à former une structure de support fixée à la partie supérieure de la pièce ou des locaux au moyen d'éléments de suspension,
- des éléments de fixation (14) qui peuvent être amenés en prise avec les éléments de retenue (12),
- des traverses (13) destinées à être fixées aux éléments de retenue (12) au moyen des éléments de fixation (14), de telle sorte que les traverses (13) s'étendent perpendiculairement aux éléments de retenue (12),
- des éléments d'accrochage (21) destinés à être fixés aux traverses (13) entre les éléments de retenue (12),
**caractérisé en ce que** le module de montage comprend en outre les caractéristiques suivantes :
- des modules comprenant au moins un panneau isolant (1), l'au moins un panneau isolant (1) présentant des trous (4) qui peuvent être traversés au moins en partie par les éléments d'accrochage (21) pour la fixation de l'au moins un panneau isolant (1) aux traverses (13), et
- des goujons de retenue (24), qui peuvent être amenés en prise avec les éléments d'accrochage (21) pour la fixation des modules aux traverses (13).

2. Module de montage selon la revendication 1, **caractérisé en ce que** le module de montage comprend en outre des diffuseurs thermiques sous la forme de plaques métalliques (7) qui sont fixées sur une surface de montage (2) de l'au moins un panneau isolant (1).

3. Module de montage selon la revendication 2, **caractérisé en ce que** l'au moins un panneau isolant (1) présente des rainures (6) et les plaques métalliques (7) présentent au moins une rainure (8), qui s'étendent respectivement le long de tracés définis et qui permettent l'introduction d'au moins un tube de circulation (27) pour le milieu caloporteur, les rainures (8) des plaques métalliques (7) pouvant être introduites dans les rainures (6) de l'au moins un panneau isolant (1) et limitant un logement pour le tube de circulation (27).

4. Module de montage selon la revendication 3, **caractérisé en ce que** les rainures (6) s'étendent dans la direction longitudinale et présentent une première partie rectiligne (6a) qui débouche dans une partie intermédiaire (6d), qui est constituée à chaque fois d'un élargissement et resserrement progressifs et sensiblement symétriques de la rainure (6), et qui s'ouvre sur une seconde partie rectiligne (6b) en formant la rainure (6) qui s'étend d'une première extrémité longitudinale (1a) du panneau isolant (1) à une seconde extrémité longitudinale (1b) du panneau isolant (1), la rainure (6) présentant, au niveau de l'interface entre la première partie rectiligne (6a) et la partie intermédiaire (6d), une extension (6c) curviligne s'étendant transversalement, qui se termine dans une rainure (6) voisine, la distance entre les deux rainures (6) voisines étant choisie de façon à être compatible avec un rayon de courbure minimal autorisé pour le tube de circulation (27) pour le milieu caloporteur, qui est conçu pour être logé dans les rainures (6).

5. Module de montage selon l'une des revendications 1 à 4, **caractérisé en ce que** la panneau isolant (1) présente des lignes de prédécoupe (5) s'étendant dans la direction longitudinale, qui s'étendent d'une extrémité longitudinale (1a) à l'autre extrémité longitudinale (1b) du panneau isolant (1) et qui sont formées dans la surface (3) inférieure opposée à la surface de montage (2) pour former des lignes de faiblesse qui permettent une rupture le long des lignes de faiblesse et permettent ainsi une modification de la largeur du panneau isolant (1).

6. Module de montage selon l'une des revendications 4 à 6, **caractérisé en ce que** chaque rainure (6) se trouvant à proximité d'un bord latéral (1c, 1d) du panneau isolant (1) présente une partie d'extension (6c) curviligne qui s'étend jusqu'au bord latéral (1c, 1d) respectif, de façon à déboucher dans une autre partie d'extension (6c) curviligne d'un autre panneau isolant (1) se trouvant à côté, moyennant quoi une extension (6c) curviligne complète est formée.

7. Module de montage selon l'une des revendications 1 à 6, **caractérisé en ce que** la rainure (8) de la plaque métallique (7) présente, en coupe transversale, une forme de « Oméga » et une profondeur et une largeur supérieures au diamètre du tube de circulation (27) pour le milieu caloporteur pour former un logement pour le tube de circulation (27).

8. Module de montage selon l'une des revendications 1 à 7, **caractérisé en ce que** les trous (4) du panneau isolant (1) s'étendent en continu de la surface de montage (2) à la surface inférieure (3) opposée, les trous (4) étant conçus pour être au moins en partie traversés par les éléments d'accrochage (21).

9. Plafond chauffant rafraîchissant, qui comprend au moins un module de montage selon l'une des revendications 1 à 8, au moins un tube de circulation (27) pour le milieu caloporteur et de préférence des panneaux de parement final, les panneaux de parement étant disposés les uns à côté des autres et fixés au module de montage pour recouvrir l'au moins un module de montage et l'au moins un tube de circulation (27).

10. Procédé de montage d'un plafond chauffant rafraîchissant, qui comprend les étapes suivantes :
- formation d'une structure porteuse par fixation d'une ossature primaire constituée d'éléments de retenue (12) à la partie supérieure d'une pièce ou à la partie supérieure de locaux, au moyen d'éléments de suspension,
- disposition d'éléments de fixation (14) sur les éléments de retenue (12),
- fixation de traverses (13) aux éléments de retenue (12) au moyen des éléments de fixation (14), de telle sorte que les traverses (13) s'étendent perpendiculairement aux éléments de retenue (12),
- fixation d'éléments d'accrochage (21) orientés vers le bas aux traverses (13) entre les éléments de retenue (12),
**caractérisé en ce que** le procédé comprend en outre les étapes suivantes :
- montage de modules comprenant au moins un panneau isolant (1) sur les éléments d'accrochage (21) qui traversent au moins en partie des trous (4) des panneaux isolants (1),
- fixation des modules aux traverses (13) par des goujons de retenue (24) qui sont en prise avec les éléments d'accrochage (21), et
- insertion d'un ou de plusieurs tubes de circulation (27) pour le milieu caloporteur dans les modules.

11. Procédé selon la revendication 10, **caractérisé en ce que** le plafond chauffant rafraîchissant est recouvert avec des panneaux de parement en fixant les panneaux de parement directement aux éléments de retenue (12) qui sont visibles entre les modules accrochés aux traverses (13).

12. Procédé selon la revendication 10 ou 11, **caractérisé en ce que** les panneaux isolants (1) sont d'abord suspendus aux traverses (13) puis les plaques métalliques (7) sont montées sur une surface de montage (2) des panneaux isolants (1) en insérant des rainures (8) en saillie de la plaque métallique (7) respective dans des rainures (6) correspondantes du panneau isolant (1).

13. Procédé selon la revendication 12, **caractérisé en ce que** les tubes (27) pour la circulation d'un milieu caloporteur sont introduits dans les rainures (8) des plaques métalliques (7) montées sur les panneaux isolants (1).

14. Procédé selon la revendication 12 ou 13, **caractérisé en ce qu'**il comprend l'utilisation de plaques métalliques (7) qui sont reliées simultanément à deux panneaux isolants (1) voisins afin de générer ainsi une liaison mécanique entre les panneaux isolants (1).

15. Procédé selon l'une des revendications 10 à 14, **caractérisé en ce qu'**il comprend l'utilisation de plaques métalliques (7) dont les rainures (8) présentent un tracé curviligne, qui correspondent aux tracés curvilignes d'une partie intermédiaire (6d) et/ou d'une extension (6c) transversale curviligne des rainures (6) prévues dans les panneaux isolants (1).
